# EUROPÄISCHE PATENTSCHRIFT

(11) **EP 3 976 955 B1**
(45) Veröffentlichungstag und Bekanntmachung des Hinweises auf die Patenterteilung: **20.09.2023**
(21) Anmeldenummer: 19728044.9
(22) Anmeldetag: 31.05.2019
(51) Int. Cl.: F03B 13/06, F17C 1/00, F16J 12/00

(54) **MIKRO-PUMPSPEICHERKRAFTWERK**
MICRO PUMPED-STORAGE POWER PLANT
MICRO-CENTRALE HYDRAULIQUE D'ACCUMULATION PAR POMPAGE

(43) Veröffentlichungstag der Anmeldung: 06.04.2022
(73) Patentinhaber: thesum GmbH, 16278 Angermünde (DE)
(72) Erfinder: FINKBEINER, Bernd, 16248 Parsteinsee (DE)
(74) Vertreter: DREISS Patentanwälte PartG mbB
(86) Internationale Anmeldenummer: PCT/EP2019/064222
(87) Internationale Veröffentlichungsnummer: WO 2020/239237

(56) Entgegenhaltungen:
- CN-A- 108 425 784
- DE-A1-102015 005 031
- GB-A- 1 518 156
- KR-A- 20070 013 554
- US-A- 1 909 502

## Beschreibung

Die Erfindung betrifft einen kostengünstigen und langlebigen Energiespeicher. Sein Haupteinsatzgebiet sind Wohnhäuser (Ein- oder Mehrfamilienhaus) und kleine Gewerbebetriebe, die über eine fluktuierende regenerative Erzeugung elektrischer Energie (Photovoltaikanlage, kleiner Windenergiekonverter) verfügen. Damit diese Systeme unabhängiger vom öffentlichen elektrischen Netz werden, wird ein Speicher für elektrische Energie benötigt. Herkömmliche Batteriespeicher sind - bezogen auf die Speicherkapazität - relativ teuer und daher oft unwirtschaftlich. Außerdem ist ihre Lebensdauer noch unbefriedigend.

Aus der DE 10 2011 118 206 A1 ist ein Pumpspeicherkraftwerk bekannt, das zwei mit Wasser befüllbare Druckbehälter umfasst. Einer der Druckbehälter wird in großer Tiefe im Meer versenkt. Wenn dieser Behälter leer ist - d. h. es befindet sich keine Flüssigkeit in ihm - kann Wasser durch eine Turbine in den Behälter strömen und dabei eine Turbine und einen mit ihr gekoppelten Generator antreiben. Wenn der Behälter mit Wasser gefüllt ist, dann kommt dieser Vorgang zum Erliegen. Wenn überschüssige elektrische Energie verfügbar ist, wird der Behälter geleert; d. h. der Speicher wird "geladen".

Aus der DE 196 06 089 A1 ist ein Druckbehälter eines Kernkraftwerks bekannt, der aus Stahlbeton besteht und außen einen Mantel aus 20 mm dickem Stahl aufweist. Dieser Mantel nimmt die auf die innere Betonhülle wirkenden Druckkräfte auf.

Aus der DE 10 215 002 654 A1 ist eine Vorrichtung zur Energiespeicherung bekannt, die zwei kommunizierende Behälter umfasst. Diese Behälter sind auf verschiedenen geodätischen Höhen angeordnet; sie können wärmegedämmt sein.

Aus der GB 1 518 156 ist ein Druckbehälter aus armiertem Beton mit einer flüssigkeitsdichten Auskleidung aus Blech bekannt. An der Außenseite ist als Korrosionsschutz eine Schicht aus Mörtel aufgetragen.Aus der US 1 909 502 GB 1 518 156 ist ein gasdichter Tank aus armiertem Beton bekannt, der eine Zugstrebe aufweist. Diese Zugstrebe überträgt die auf Boden und Deckel wirkenden Druckkräfte und sorgt dadurch für einen Kräfteausgleich.

Der Erfindung liegt die Aufgabe zugrunde, einen preisgünstigen Energiespeicher und ein Mikro-Pumpspeicherkraftwerk bereitzustellen, die es ermöglichen, einen kurz- und mittelfristigen Ausgleich zwischen der fluktuierenden regenativen Erzeugung elektrischer Energie und dem Bedarf an elektrischer Energie in einem kleinen elektrischen Inselnetz zu schaffen.

Diese Aufgabe wird erfindungsgemäß durch einen Druckspeicher nach Anspruch 1 und ein Mikro-Pumpspeicherkraftwerk nach Anspruch 6 gelöst. Vorteilhafte Ausgestaltungen der Erfindung sind in den Unteransprüchen beansprucht.

Mit Hilfe des erfindungsgemäßen Druckspeichers wird die Energiedichte gegenüber einem drucklosen Behälter erhöht. Dadurch verringert sich der Bauraumbedarf und es können kostengünstige Turbinen (Peltonturbinen) und Pumpen eingesetzt werden. Außerdem können der drucklose Sammelbehälter und der erfindungsgemäße Druckspeicher in unmittelbarer Nähe zueinander installiert werden. Dadurch ist es möglich, das Prinzip der Energiespeicherung, wie es aus großen Pumpspeicherkraftwerken schon lange bekannt ist, auf kleine Mikro-Pumpspeicherkraftwerke zu übertragen und weiterzuentwickeln. Die äußere Schalung ermöglicht das Gießen des Druckbehälters vor Ort. Dadurch werden nicht nur Transportkosten eingespart, sondern es ergibt sich der zusätzliche Vorteil, dass der Druckbehälter vor Ort in gleichbleibend hoher Qualität und mit wenig Arbeitsaufwand hergestellt werden kann.

Als Speichermedium kommen bevorzugt Wasser und Luft zum Einsatz, die kostengünstig und ungefährlich sind. Das kompressible Luftpolster oberhalb des Wassers wirkt wie Feder und speichert die von der Pumpe geleistete Pumparbeit. Da Wasser nahezu inkompressibel ist, ist sein diesbezüglicher Beitrag relativ klein.

Der Nutzer erhält durch das erfindungsgemäße Pumpspeicherkraftwerk die Möglichkeit, wenn mehr Strom zum Beispiel in einer Photovoltaik-Anlage erzeugt wird als aktuell nachgefragt wird (Überschussstrom) durch das Gas- oder Luftpolster in dem Druckbehälter zu speichern und diese Energie zu einem späteren Zeitpunkt in Form von elektrischer Energie wieder abzurufen.

Das erfindungsgemäße Mikro-Pumpspeicherkraftwerk ist kostengünstig, robust, langlebig, nahezu verschleißfrei und nachhaltig. Es benötigt keine seltenen und teuren Rohstoffe. Im Wesentlichen werden Stahl und Beton benötigt. Alle eingesetzten Rohstoffe sind gut verfügbar und können weitestgehend rezykliert werden.

Nachfolgend wird die Erfindung anhand eines Ausführungsbeispiels näher erläutert.

Die Zeichnungen zeigen:

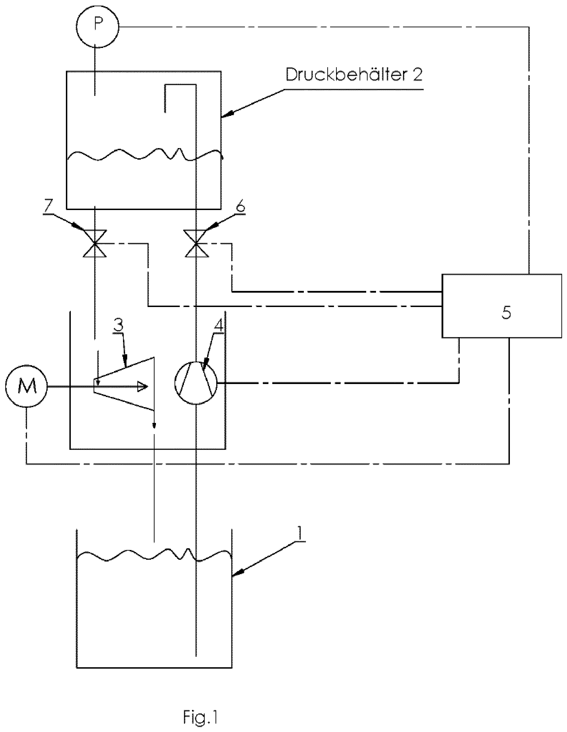

Figur 1: eine schematische Darstellung eines erfindungsgenmäßen Mikro-Pumpspeicherkraftwerks,
Figur 2: eine schematische Darstellung eines ersten Ausführungsbeispiels eines erfindungsgemäßen Druckspeichers und
Figur 3: eine schematische Darstellung eines zweiten Ausführungsbeispiels eines erfindungsgemäßen Druckspeichers.

### Beschreibung des Ausführungsbeispiels

Das erfindungsgemäße Pumpspeicherkraftwerk umfasst zwei Behälter, einen drucklosen Sammelbehälter 1 und einen Druckbehälter 2, eine Turbine 3, eine Pumpe 4, ein Steuergerät 5, Ventile 6 und 7 sowie hydraulische und elektrische Leitungen (ohne Bezugszeichen). Die Turbine 3 ist mit einer elektrischen Maschine M gekoppelt. In der dargestellten Konfiguration ist die elektrische Maschine M ein Generator. Die Pumpe 4 wird in der dargestellten Konfiguration von einem nicht dargestellten Elektromotor angetrieben. Es sind auch Pumpturbinen bekannt, die wahlweise als Turbine oder als Pumpe arbeiten. Dann arbeitet die elektrische Maschine M zeitweise als Generator und zeitweise als Elektromotor. Eine gesonderte Pumpe 4 kann dann entfallen.

Der drucklose Sammelbehälter 1 muss - bezogen auf die geodätische Höhe - unterhalb der Turbine 3 angebracht werden, damit das Wasser vom Austritt der Turbine 3 in den Sammelbehälter 1 abfließen kann. Der Sammelbehälter 1 muss nicht druckfest ausgeführt werden; es reicht aus wenn er wasserdicht ist.

Der Sammelbehälter 1 kann aus Betonfertigelementen, wie zum Beispiel Abwasserrohren, oder aus Kunststoff(-rohren) hergestellt sein. Eine oder mehrere handelsübliche Regenwasserzisternen sind durchaus geeignet. Die Form des Sammelbehälters 1 spielt keine Rolle, jedoch sollte die Oberfläche innen so ausgestaltet sein, dass keinerlei Ablösungen oder Abplatzungen vom Sammelbehälter 1 in das Wasser gelangen. Andernfalls könnten die Pumpe 4 und/oder die Turbine 3 Schaden nehmen.

Der unter hohem Druck (Betriebsdruck 10 bar bis 50 bar) stehende Druckbehälter 2 und die Pumpe 4 können in ihren Positionen relativ zu der Turbine 3 frei bestimmt werden. Oftmals wird man die Pumpe 4 zusammen mit der Turbine 3 in einem kleinen Turbinenraum oder in einem Kellerraum eines Wohnhauses anordnen.

Der Sammelbehälter 1, der Druckbehälter 2 und die Leitungen sind bevorzugt opak (lichtundurchlässig), um Algenbildung in dem Wasser zu verhindern. Der Sammelbehälter 1 und der Druckbehälter 2 können mit einer Wärmedämmung versehen werden, so dass im Winter ein Frostschutz gewährleistet ist. Außerdem können dann der Sammelbehälter 1 und/oder der Druckspeicher 2 zusätzlich als Warmwasserspeicher genutzt werden.

Die Turbine 3 und die Pumpe 4 sind über Leitungen einenends mit dem Sammelbehälter 1 und anderenends mit dem Druckbehälter 2 verbunden. Es können handelsübliche Pumpen, Turbinen (vorzugsweise Peltonturbinen) oder Pumpturbinen eingesetzt werden. Die Turbine 3 treibt einen Generator an, der wiederum mit dem elektrischen Netz des zu versorgenden Objekts (Haus, Gewerbebetrieb) verbunden ist. Entsprechendes gilt für die Pumpe. Wenn eine Pumpturbine eingesetzt wird, kann die gleiche elektrische Maschine als Motor und Generator arbeiten. Das verringert die Investitionskosten nochmals.

Es können mehre Turbinen oder Pumpen parallel geschaltet werden. Selbstverständlich ist ein Steuer- und Regelgerät 5 für die Pumpe 4 und die Turbine 3 sowie zum Schalten der Absperrventile in den Druckleitungen zwischen Druckspeicher 2 sowie Pumpe 4 und Turbine 3 vorgesehen. Die Signalleitungen sind als unterbrochene Linien dargestellt.

Wenn ein zu dem mit elektrischer Energie zu versorgenden Haus oder zu einem Inselnetz gehörender nicht dargestellter Energieerzeuger (PV-Anlage, Windenergiekonverter) mehr elektrische Energie erzeugt als momentan benötigt wird, wird der Elektromotor M mit dieser "überschüssigen" elektrischen Energie angetrieben, so dass die Pumpe 4 Wasser aus dem Sammelbehälter 1 in den Druckbehälter 2 fördert. Dabei wird der Druck des Wassers und in Folge dessen auch der Druck eines Gaspolsters über dem Flüssigkeitsspiegel in dem Druckbehälter. Auf diese Weise wird die "überschüssige" elektrische Energie in Druckenergie umgewandelt und im Druckbehälter 2 gespeichert.

Die Förderung von Wasser in den Druckbehälter 2 endet, sobald keine überschüssige elektrische Energie mehr von den Energieerzeugern geliefert wird oder der Druckspeicher 2 seinen maximalen Betriebsdruck erreicht hat; dann ist er vollständig gefüllt. Sobald sich das gesamte Wasser im Druckbehälter 2 befindet, wird ggf. die überschüssige elektrische Energie dazu benutzt, das bereits komprimierte Gas weiter zu verdichten und in einen zusätzlichen Druckbehälter zu befördern.

Dann werden das erste Absperrventil 6 in der Druckleitung zwischen Pumpe 4 und Druckspeicher 2 geschlossen und der Motor M ausgeschaltet.

Wenn der Druckspeicher 2 vollständig gefüllt ist und immer noch überschüssige elektrische Energie verfügbar ist, können der Sammelbehälter 1 und/oder der Druckspeicher 2 mit Hilfe einer elektrischen Widerstandsheizung (nicht dargestellt) aufgeheizt werden; so dass die elektrische Energie in thermische Energie umgewandelt wird und diese thermische Energie in einem oder beiden Behältern 1, 2 gespeichert werden. Da Wasser eine relativ große spezifische Wärmekapazität hat, kann viel thermische Energie in einem oder beiden Behältern 1, 2 gespeichert werden.

Es ist möglich, dass die Speichertemperaturen von Sammelbehälter 1 und Druckspeicher 2 verschieden sind, um verschiedene Wärmeverbraucher (Warmwasser, Heizung, ...) optimal mit Warmwasser versorgen zu können. Allerdings finden beim Pump- und Turbinenbetrieb eine Vermischung des Wassers und in Folge dessen ein Temperaturausgleich statt.

Wenn mehr elektrische Energie benötigt wird als der oder die Energieerzeuger liefern können, wird das zweite Absperrventil 7 in der Druckleitung zwischen Druckspeicher 2 und Turbine 3 geöffnet, so dass das unter hohem Druck stehende Wasser vom Druckspeicher 2 durch die (Pelton-) Turbine 3 zum Semmelbehälter 1 fließt und den angeschlossenen Generator M antreibt. Auf diese Weise kann die fluktuierende Erzeugung elektrischer Energie (z. B. aus einer PV-Anlage) an den Bedarf eines Hauses oder eines Inselnetzes angepasst werden.

Zusätzlich kann das eingesetzte Wasservolumen gleichzeitig als Wärmespeicher verwendet werden. Optionale Wärmetauscher, einer im Druckbehälter 2 und einer im Sammelbehälter 1, erlauben es, zusätzlich Energie in Form von sensibler Wärme in dem Wasser der Behälter 1 und/oder 2 zwischenzuspeichern und bei Bedarf wieder zu entnehmen. Wenn die Wände der Behälter 1, 2 entsprechend gedämmt sind, können auf diese Weise beachtliche Wärmemengen gespeichert werden, die dann für die Brauchwassererwärmung oder Heizung genutzt werden können.

Bevorzugt werden zwei Turbinen (Peltonturbinen) mit verschiedener Leistung eingesetzt. Die kleinere der Turbinen liefert eine Grundlast, während größere der beiden Turbinen Mittellast und Spitzenlast abdeckt. Die größere der beiden Turbinen ist besonders bevorzugt eine Peltonturbine, die mit mehreren zuschaltbaren Düsen ausgestattet ist, die entsprechend der nachgefragten Leistung zu- oder abgeschaltet werden.

Um die Netzfrequenz in den sehr kurzen Zeiten (weniger als 5 s), in denen die Drehzahl der Turbine(n) und damit auch des Generators beim Zuschalten stark schwankt, zu stabilisieren, werden diese mit einem Akkumulator als elektrischer Pufferspeicher überbrückt, welcher immer weitgehend geladen ist. Herkömmliche Starterbatterien für PKWs oder LKWs sind in vielen Fällen ausreichend. Zwischen dem Drehstrom- oder Wechselstromnetz des Hauses und dem Akkumulator ist ein Inverter oder Wechselrichter vorhanden.

Weil die Fördermenge der Pumpe 4 und das Schluckvermögen der Turbine 3 relativ klein sind, können die handelsübliche Rohrleitungen und Ventile 6, 7 eingesetzt werden, die aus normgerechten und am Markt verfügbaren Standard-Baureihen ausgewählt werden. Das erfindungsgemäße Mikro-Pumpspeicherkraftwerk ist robust, langlebig sowie wartungs- und verschleißarm.

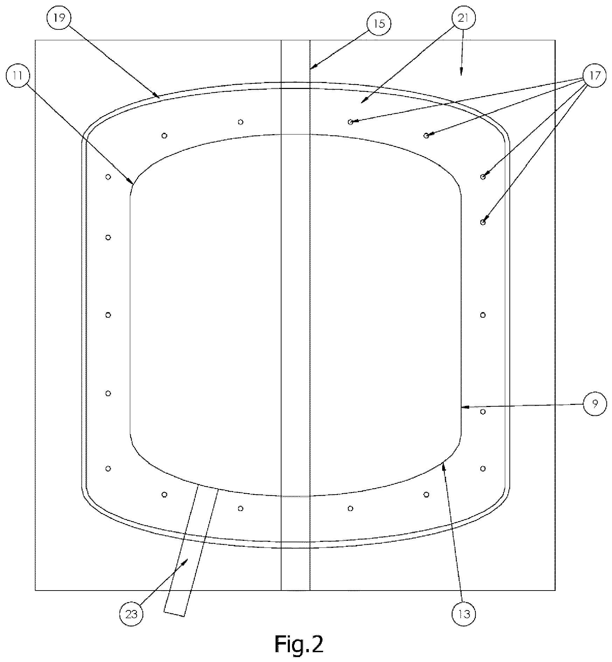

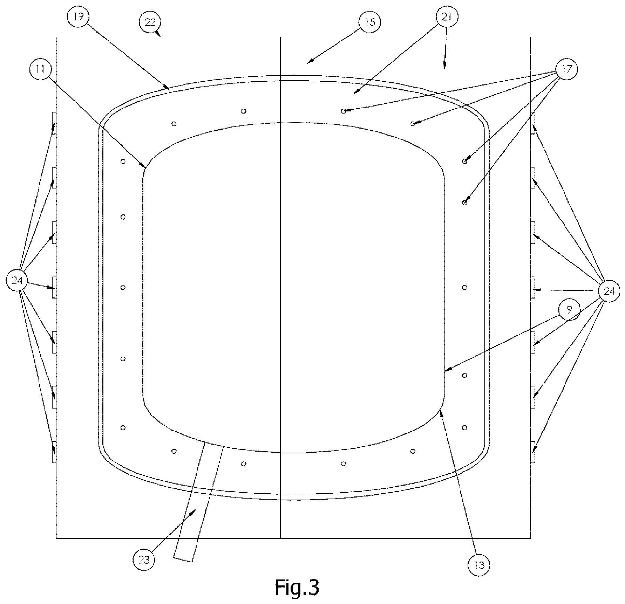

Ein zentrales Element dieses Pumpspeicherkraftwerks ist der Druckbehälter 2. Die Gestaltung des Druckbehälters 2 beeinflusst die Gesamtherstellkosten maßgebend. Der Aufbau des Druckbehälters 2 wird nachfolgend zusammen mit den Figuren 2 und 3 beschrieben:
Der Druckbehälter 2 muss entsprechend den im Betrieb auftretenden Drücken druckfest ausgeführt werden. Dies wird vorzugsweise dadurch erreicht, dass der Druckbehälter 2 aus armiertem Stahlbeton zur Aufnahme der aus dem Betriebsdruck resultierenden Druckkräfte und einer flüssigkeitsdichten Innenauskleidung aus (Stahl-)Blech gefertigt wird. Diese Auskleidung 9 garantiert eine flüssigkeits- und gasdichte Hülle.

Der Druckbehälter 2 muss so dimensioniert sein, dass in ihm das ganze Wasservolumen des Sammelbehälters 1 Platz findet und zusätzlich Platz für eine Luft- oder Gaspolster bieten. Das Luft- oder Gaspolster wird unter einem Vordruck gehalten, selbst wenn sich kein Wasser in dem Druckbehälter 2 befindet. Wenn der Druckbehälter 2 mit Wasser gefüllt und somit beladen wird, wird das Luft- oder Gaspolster weiter komprimiert und der Druck im Druckbehälter 2 nimmt weiter zu.

Alternativ hierzu kann ein separater Behälter (nicht dargestellt) für das Gaspolster vorgesehen sein, der Raum für das verdichtete Gas bereitstellt. Über das Luft- oder Gaspolster werden die für die Anwendung gewünschten Druckverhältnisse geschaffen.

Der separate Behälter ist mit dem druckfesten Sammelbehälter 2 durch eine Ausgleichsleitung verbunden. Diese Ausgleichsleitung sollte an der Decke des Druckbehälters 2 abgehen.

In der Regel wird man den Druckbehälter 2 mit einer druckdicht verschließbaren Montage- oder Revisionsöffnung (nicht dargestellt) in der Decke versehen, um Wartungsarbeiten im Inneren des Druckbehälters 2 ausführen zu können.

Der Druckbehälter 2 weist in der Regel ein größeres Volumen auf als der Sammelbehälter 1, da in dem Druckbehälter 2 ein Luft- oder einem Gaspolster über dem Wasserspiegel vorhanden ist. Das Luft- oder einem Gaspolster wird unter Druck gesetzt und "simuliert" eine geodätische Höhe des Druckbehälters, die weit oberhalb des Sammelbehälters 1 liegt. Die dadurch simulierte Höhe ermöglicht den Einsatz von kleinen schnelllaufenden Turbinen 3 zur Stromerzeugung, die einen hohen Wirkungsgrad aufweisen und kostengünstig sind. Durch den Einsatz von mehreren kleinen Turbinen kann der Bedarfscharakteristik des Strombedarfs ideal entsprochen werden. Hier finden unter anderem die für kleine Durchflussmengen und große potentiellen Niveaus gut geeigneten Peltonturbinen ihren Einsatz.

Die Innenauskleidung besteht aus drei flüssigkeitsdicht miteinander verschweißten Teilen:
Ein zylindrischer Teil 9, ein Deckel 11 und ein Boden 13. Letztere können handelsübliche Klöpperböden sein.

Zwischen Deckel 11 und Boden 13 kann eine Zugstrebe 15 eingeschweißt sein. In dem dargestellten Ausführungsbeispiel ist die Zugstrebe 15 durch den Druckbehälter hindurchgeführt, um eine optimale Kraftübertragung vom Druckbehälter 2 in die Zugstrebe 15 zu erreichen.

Umgeben ist die Innenauskleidung von Armierungseisen 17 und 19. Die Armierungseisen 17 und 19 sind bevorzugt geschlossene Kreisringe, um die Druckkräfte bestmöglich aufzunehmen. Die Zugstrebe 15 kann mit den Armierungseisen 17 verbunden, insbesondere verschweißt sein.

Eine äußere Schalung ist mit 22 gekennzeichnet. Zwischen der äußeren Schalung 22 und der Auskleidung 9, 11, 13 werden die Armierungseisen 17, 19 positioniert. Anschließend wird der verbliebene Raum mit Beton 22 ausgegossen.

An die Innenauskleidung können die Druckleitungen mit bewährten Verfahren (Schweißen oder geschraubte Flanschverbindungen) kostengünstig und zuverlässig angeschlossen werden.

Mit 23 ist eine Ablaufleitung gekennzeichnet.

Durch die Trennung der Funktionen "Stabilität" und "Dichtheit" im Druckbehälter 2 können mit gängigen Schweißverfahren kostengünstig dichte, druckfeste Verbindungen hergestellt werden.

Den Funktionen der Wände werden unterschiedliche Materialien zu geordnet. Die dichtende Funktion übernimmt die Innenauskleidung 9, 1, 13 aus Blech. Vorzugsweise wird hier eine geringe Blechdicke von 1 mm bis 5mm zu wählen sein. Diese Blechdicke lässt sich sehr gut kalt umformen und verschweißen, so dass die drei Hauptelemente 9, 11 und 13 auf der Baustelle verschweißt werden können. Die Druckkräfte im Inneren des Druckbehälters 2 werden durch das Blech der Innenauskleidung durchgeleitet und an den mit Stahl armierten (siehe die Armierungseisen 17 und 19) Beton 22 übertragen. Die kräfteführende Betonschicht wird durch optimierte Bewehrungsstähle so dimensioniert, dass der Betriebsdruck ohne Verformung sicher aufgenommen werden kann.

Das zum Herstellen der Innenauskleidung eingesetzte Blech dient bei der Herstellung des Beton-Behälters als "verlorene" Innen-Schalung und verbleibt im Druckbehälter 2. Auch die Schalung 22 ist eine verlorene Form.

Dieses Herstellungsverfahren erlaubt ein Betonieren des Druckspeichers 2 am Einsatzort, so dass aufwändige Transporte erspart bleiben. Die Einzelteile der Innenauskleidung (verlorene Schalung) und die Armierungseisen 17, 19 können so vorgeformt werden, dass die Einzelteile leicht transportierbar sind und vor Ort verschweißt werden können.

Nachdem mit einer äußeren Schalung 22 und dem eingesetzten Bewehrungsstahl eine zu vergießende Schalung entstanden ist, kann die Schalung mit Beton 21 in der erforderlichen Qualität ausgegossen werden. Dieser ist nahezu überall als Transportbeton zu beziehen.

Nach dem Betonieren kann der Behälter mit einem sehr hohen Prüfdruck belastet werden, der dafür sorgt, dass sich das Blech der Innenauskleidung in jedem Bereich an die kräfteführende Betonwand anlegt. Dazu wird die Innenauskleidung Blech mit einem Druck beaufschlagt, der zu einer plastischen Verformung des Blechs führt, so dass sich das Blech an dem Betonmantel anlegt. Die hervorragenden Kaltverformeigenschaften von Blech kommen dieser Fertigungsmethode zu gute.

Die kreisrunden Armierungseisen 17, aber auch die Armierungseisen 19 können verschweißt werden und werden beim Gießen des Betons mit Schablonen in der gewünschten Lage gehalten.

Um Zugbelastungen aufzunehmen kann zwischen Boden 13 und Deckel 11 eine Zugstrebe 15 eingeschweißt werden so dass ein Kraftschluss zwischen Deckel 11 und Boden 13 vorhanden ist, der die statische Belastung stark reduziert. Durch die Verwendung einer dichtenden Innenhaut aus Blech, kann die Deckel-Boden-Verbindung dicht verschweißt werden und die Kräfte werden durch den Beton 21 und die Armierungen 17, 19 abgeleitet.

In der Figur 3 ist ein weiteres Ausführungsbeispiel eines Druckbehälters 2 dargestellt. Bei diesem Ausführungsbeispiel ist die äußere Schalung bevorzugt aus Stahl-Blech oder einem anderen Material, das eine sehr genaue Herstellung ermöglicht. Um die äußere Schalung 22 sind Ringe 24 gelegt, die - ähnlich wie eine Fassdaube - Zugkräfte aufnehmen und die Betonwand 21, 17, 19) des Druckbehälters 2 entlasten. Damit die Kraftübertragung vom Druckbehälter 2 auf die Ringe 24 funktioniert, müssen die Ringe 24 eng und ohne Spalt, ggfls. mit einer Vorspannung an der äußeren Schalung 22 anliegen.

Da sich das eingesetzte Wasser in ständigem Kreislauf befindet, ist keine Korrosion oder Verschmutzung zu erwarten. Durch geringe Zugabe von Chlor kann der Algenbildung entgegengewirkt werden, somit wird auch einer Biofilmablagerung entgegen gewirkt. Ein Verschleiß der Turbinenschaufeln ist dadurch minimiert. Die Anlage kann übereinander montiert werden, wobei sich der Sammelbehälter 1 ganz in den Boden versenken lassen könnte. So können große Bauhöhen vermieden werden.

Bei entsprechender Planung kann die ganze Anlage im Zentrum eines Gebäudes montiert werden, so dass die gesamte zu speichernde Wärmemenge ihre Verluste in das Gebäude abgibt und sich dadurch die Effizienz deutlich steigern lässt. Im Verbund können viele Anlagen zur Speicherung großer Energiemengen und dadurch zur Netzentlastung beitragen. So kann zum Beispiel Energie aus Windkraftanlagen, die abgeschaltet werden müssten, zwischengespeichert werden.

## Patentansprüche

1. Druckbehälter (2) für ein Mikro-Pumpspeicherkraftwerk, wobei der Druckbehälter eine zylindrische Wand sowie einen Boden (13) und einen Deckel (11) aufweist, wobei Wand, Boden und Deckel aus armiertem Stahlbeton (21, 17, 19) bestehen und mit einer flüssigkeitsdichten Auskleidung aus Blech (9, 11, 13), bevorzugt aus Stahl oder Edelstahl, versehen ist, **dadurch gekennzeichnet, dass** der Druckbehälter (2) eine äußere Schalung (22) aufweist.

2. Druckbehälter (2) nach Anspruch 1, **dadurch gekennzeichnet, dass** zwischen dem Boden (13) und dem Deckel (11) eine Zugstrebe (15) angeordnet ist.

3. Druckbehälter (2) nach Anspruch 1 oder 2, **dadurch gekennzeichnet, dass** die Armierung mindestens im Bereich der zylindrischen Außenwand geschlossene Ringe (17, 19) umfasst.

4. Druckbehälter (2) nach einem der Ansprüche 1 bis 3, **dadurch gekennzeichnet, dass** die äußere Schalung (22) aus Metall besteht.

5. Druckbehälter (2) nach einem der vorhergehenden Ansprüche, **dadurch gekennzeichnet, dass** um die äußere Schalung (22) herum mindestens ein Ring (24) angeordnet ist.

6. Mikro-Pumpspeicherkraftwerk umfassend einen geschlossenen Sammelbehälter (1), einen geschlossenen Druckbehälter (2) nach einem der Ansprüche 1 bis 3, mindestens eine Turbine (3), die mit einem Generator gekoppelt ist, und eine elektrisch angetriebene Pumpe (4).

7. Mikro-Pumpspeicherkraftwerk nach Anspruch 6, **dadurch gekennzeichnet, dass** der Druckbehälter (2) über Leitungen mit der Pumpe (4) und der Turbine (3) verbunden ist.

8. Mikro-Pumpspeicherkraftwerk nach Anspruch 7, **dadurch gekennzeichnet, dass** die Leitungen mit der Auskleidung verschweißt oder auf andere Weise druckdicht verbunden sind.

9. Mikro-Pumpspeicherkraftwerk nach einem der Ansprüche 6 bis 8 **dadurch gekennzeichnet, dass** der Sammelbehälter (1) über Leitungen mit der Pumpe (4) und der Turbine (3) verbunden ist.

10. Mikro-Pumpspeicherkraftwerk nach einem der Ansprüche bis 9, **dadurch gekennzeichnet, dass** es ein Steuergerät (5) und/oder einen Akkumulator sowie einen Wechselrichter aufweist, und dass der Akkumulator dazu dient, die Spannung in dem elektrischen Netz eines Hauses oder in einem Inselnetz zu stabilisieren.

11. Mikro-Pumpspeicherkraftwerk nach einem der Ansprüche 6 bis 10, **dadurch gekennzeichnet, dass** der Sammelbehälter (1) und/oder der Druckbehälter (2) eine Wärmedämmung aufweist, und dass in dem Sammelbehälter (1) und/oder dem Druckbehälter (2) jeweils ein Wärmetauscher vorgesehen ist.

12. Mikro-Pumpspeicherkraftwerk nach einem der Ansprüche 6 bis 11, **dadurch gekennzeichnet, dass** zwei parallel geschaltete Turbinen unterschiedlicher Leistung vorgesehen sind.

## Claims

1. Pressure vessel for a micro-pumped storage power plant, the pressure vessel having a cylindrical wall as well as a bottom (13) and a cover (11), the wall, bottom and cover being made of reinforced concrete (21, 17, 19) and the pressure vessel being provided with a liquid-tight lining made of sheet metal (9, 11, 13), preferably made of steel or stainless steel, **characterized in that** the pressure vessel (2) has an outer formwork (22).

2. Pressure vessel (2) according to claim 1, **characterized in that** a diagonal tie (15) is arranged between the bottom (13) and the cover (11).

3. Pressure vessel (2) according to claim 1 or claim 2, **characterized in that** the reinforcement comprises closed rings (17, 19) at least in the region of the cylindrical outer wall.

4. Pressure vessel (2) according to any of claims 1 to 3, **characterized in that** the outer formwork (22) is made of metal.

5. Pressure vessel (2) according to any of the preceding claims, **characterized in that** at least one ring (24) is arranged around the outer formwork (22).

6. Micro-pumped storage power plant comprising a closed collecting vessel (1), a closed pressure vessel (2) according to any of claims 1 to 3, at least one turbine (3) coupled to a generator, and an electrically driven pump (4).

7. Micro-pumped storage power plant according to claim 6, **characterized in that** the pressure vessel (2) is connected to the pump (4) and the turbine (3) via lines.

8. Micro-pumped storage power plant according to claim 7, **characterized in that** the lines are welded to the lining or are connected in a pressure-tight manner in another way.

9. Micro-pumped storage power plant according to any of claims 6 to 8, **characterized in that** the collecting vessel (1) is connected to the pump (4) and the turbine (3) via lines.

10. Micro-pumped storage power plant according to any of claims 6 to 9, **characterized in that** it comprises a control device (5) and/or a rechargeable battery as well as an inverter, and **in that** the rechargeable battery is used to stabilize the voltage in the electrical network of a house or in a microgrid.

11. Micro-pumped storage power plant according to any of claims 6 to 10, **characterized in that** the collecting vessel (1) and/or the pressure vessel (2) has thermal insulation, and **in that** a heat exchanger is provided in each case in the collecting vessel (1) and/or the pressure vessel (2).

12. Micro-pumped storage power plant according to any of claims 6 to 11, **characterized in that** two turbines of different power connected in parallel are provided.

## Revendications

1. Contenant sous pression (2) pour une micro-centrale hydraulique d'accumulation par pompage, dans lequel le contenant sous pression présente une paroi cylindrique ainsi qu'un fond (13) et un couvercle (11), dans lequel la paroi, le fond et le couvercle sont constitués d'un béton armé (21, 17, 19) et est pourvu d'un revêtement étanche au liquide composé de tôle (9, 11, 13), de préférence de tôle ou d'acier inoxydable, **caractérisé en ce que** le contenant sous pression (2) présente une coque extérieure (22).

2. Contenant sous pression (2) selon la revendication 1, **caractérisé en ce qu'**un tirant (15) est disposé entre le fond (13) et le couvercle (11).

3. Contenant sous pression (2) selon la revendication 1 ou 2, **caractérisé en ce que** l'armature comprend des bagues (17, 19) fermées au moins dans la zone de la paroi extérieure cylindrique.

4. Contenant sous pression (2) selon l'une quelconque des revendications 1 à 3, **caractérisé en ce que** la coque extérieure (22) est constituée de métal.

5. Contenant sous pression (2) selon l'une quelconque des revendications précédentes, **caractérisé en ce qu'**au moins une bague (24) est disposée autour de la coque extérieure (22) .

6. Micro-centrale hydraulique d'accumulation par pompage comprenant un contenant collecteur (1) fermé, un contenant sous pression (2) selon l'une quelconque des revendications 1 à 3 fermé, au moins une turbine (3), qui est accouplée à un générateur, et une pompe (4) entraînée électriquement.

7. Micro-centrale hydraulique d'accumulation par pompage selon la revendication 6, **caractérisée en ce que** le contenant sous pression (2) est relié à la pompe (4) et à la turbine (3) par l'intermédiaire de conduites.

8. Micro-centrale hydraulique d'accumulation par pompage selon la revendication 7, **caractérisée en ce que** les conduites sont soudées au revêtement ou reliées de manière étanche à la pression d'une autre manière.

9. Micro-centrale hydraulique d'accumulation par pompage selon l'une quelconque des revendications 6 à 8, **caractérisée en ce que** le contenant collecteur (1) est relié à la pompe (4) et à la turbine (3) par l'intermédiaire de conduites.

10. Micro-centrale hydraulique d'accumulation par pompage selon l'une quelconque des revendications 6 à 9, **caractérisée en ce qu'**elle présente un appareil de commande (5) et/ou un accumulateur ainsi qu'un onduleur, et que l'accumulateur sert à stabiliser la tension dans le réseau électrique d'une maison ou dans un réseau en îlot.

11. Micro-centrale hydraulique d'accumulation par pompage selon l'une quelconque des revendications 6 à 10, **caractérisée en ce que** le contenant collecteur (1) et/ou le contenant sous pression (2) présente une isolation thermique, et que respectivement un échangeur de chaleur est prévu dans le contenant collecteur (1) et/ou le contenant sous pression (2) .

12. Micro-centrale hydraulique d'accumulation par pompage selon l'une quelconque des revendications 6 à 11, **caractérisée en ce que** deux turbines montées en parallèle de différente puissance sont prévues.
